# FASCICULE DE BREVET EUROPEEN

(11) **EP 3 042 804 B1**
(45) Date de publication et mention de la délivrance du brevet: **09.08.2017**
(21) Numéro de dépôt: 15201594.7
(22) Date de dépôt: 21.12.2015
(51) Int. Cl.: B60R 3/02

(54) **MARCHEPIED ESCAMOTABLE**
AUSKLAPPBARE TRITTSTUFE
RETRACTABLE STEP

(30) Priorité: 12.01.2015 FR 1550211
(43) Date de publication de la demande: 13.07.2016
(73) Titulaire: Groupe Mecalac, 74940 Annecy-le-Vieux (FR)
(72) Inventeur: MARCHETTA, Henri, 74320 Sevrier (FR); BONI, Maxime, 74330 Sillingy (FR); DE PIERRE DE BERNIS, Frédéric, 74230 Thônes (FR)
(74) Mandataire: Cabinet Laurent & Charras

(56) Documents cités:
- EP-A1- 1 449 722
- US-A- 3 388 925

## Description

### Domaine technique

La présente invention se rattache au domaine des véhicules routiers, et notamment les engins de travaux publics ou de chantier, et se rapporte à un marchepied escamotable prévu pour un tel véhicule.

L'invention concerne plus particulièrement un marchepied télescopique prévu pour être mis en place au niveau de la roue d'un véhicule routier.

### Etat de la technique

Afin de monter à bord des poids lourds, qu'il s'agisse par exemple de camions, de tracteurs ou d'engins de chantier, ces véhicules routiers sont habituellement équipés d'un marchepied. En effet, les postes de conduite de ces véhicules sont généralement situées à une hauteur élevée par rapport au sol et un tel marchepied s'avère indispensable pour y accéder.

Ce marchepied est habituellement prévu d'un côté ou de l'autre de la roue avant du véhicule, parfois associé à une poignée ou une main courante pour aider le chauffeur à monter à bord.

Dans le cas où la portière de ces véhicules est habituellement située au même niveau que la roue avant, le marchepied se trouve décalé latéralement par rapport à la portière, ce qui complique la manoeuvre pour le chauffeur et entraîne un risque de chute accru. Les chutes à partir du marchepied sont connues pour être fréquentes et représentent un risque permanent pour les chauffeurs poids lourds.

Pour répondre à ce problème, la demande de brevet EP 1449722 au nom du Déposant divulgue un marchepied prévu pour être monté au niveau de la roue avant d'un poids lourd, d'après le préambule de la revendication 1. Ce marchepied comporte deux marches qui pivotent chacune de 90 degrés l'une vers l'autre autour d'un axe vertical afin de passer d'une position escamotée dans laquelle les marches ne font pas saillie sur la chaussée lorsque le véhicule est en mouvement, à une position déployée permettant la montée et la descente du véhicule pour le chauffeur à l'arrêt du véhicule.

En raison du mode de déploiement du marchepied selon la demande de brevet EP 1449722, seules des marches de petites dimensions peuvent être utilisées.

En outre dans le cas où le chauffeur doit descendre d'urgence de son véhicule sans avoir le temps de déployer un marchepied, il est obligé de placer ses pied dans des espaces exigus et inconfortables.

### Description de l'invention

Il existe donc un besoin pour une marche ne faisant pas saillie sur la chaussée mais pouvant néanmoins être utilisée par le chauffeur lorsque le marchepied est en position escamotée.

L'objet de la présente invention vise par conséquent à pallier les inconvénients de l'art antérieur en proposant un nouveau marchepied télescopique prévu pour être mis en place au niveau de la roue d'un véhicule routier.

Ces objectifs sont atteints à l'aide d'un marchepied prévu pour être mis en place au niveau de la roue d'un véhicule routier de type poids lourd, comportant une marche supérieure, une marche inférieure et un moyen de déplacement permettant de le déployer et de l'escamoter entre les deux positions suivantes :
- une position escamotée dans laquelle les marches supérieure et inférieure sont repliées à l'arrière de la roue, de sorte de ne pas dépasser du gabarit du véhicule ; et
- une position déployée dans laquelle les marches supérieure et inférieure font saillie vers l'extérieur pour permettre au chauffeur de monter au poste de conduite et d'en descendre.

Ce marchepied se caractérise en ce que :
- la marche inférieure comporte une marche de secours prévue à l'arrière de celle-ci ;
- la marche inférieure est montée pivotante par rapport à la marche supérieure ;
- les marches supérieure et inférieure sont déplacées en translation par le moyen de déplacement ;
- le moyen de déplacement comporte en outre un moyen de pivotement pour faire pivoter la marche inférieure de sorte que :
   - en position escamotée du marchepied, la marche inférieure est orientée vers le véhicule tandis que la marche de secours est orientée vers le flanc externe du véhicule ;
   - en position déployée du marchepied, la marche inférieure est orientée vers le flanc externe du véhicule tandis que la marche de secours est orientée vers le véhicule.

Etant escamotable, le marchepied ne dépasse pas du gabarit du véhicule lorsqu'il est en position escamotée. Pourvu d'une marche de secours le marchepied de l'invention facilite cependant la montée et la descente du chauffeur lorsque le marchepied est en position escamotée, par exemple en cas d'urgence ou lorsque le marchepied est défectueux et reste bloqué en position escamotée. En outre, grâce au mode de déploiement du marchepied selon l'invention, il est possible d'utiliser des marches présentant des dimensions supérieures à celle de l'art antérieur évoqué précédemment.

Selon un exemple de mise en oeuvre de l'invention, le moyen de déplacement comprend un vérin hydraulique ou pneumatique, préférentiellement un vérin double tige. Le choix de la solution vérin double tige permet d'avoir la solution la plus compacte possible, puisque le vérin est à la fois l'actionneur et le porteur du mécanisme.

Selon un autre exemple de mise en oeuvre de l'invention, en position déployée du marchepied, les marches supérieure et inférieure sont positionnées à proximité immédiate du flanc externe de la roue et la marche supérieure présente une découpe pour ne pas entrer en contact avec la roue lors du déploiement et de l'escamotage du marchepied. Ceci permet au marchepied de l'invention d'être avantageusement déployé au niveau de la roue avant du véhicule.

Selon autre caractéristique de l'invention, lorsque le marchepied est en position escamotée ou déployée, la marche inférieure présente une longueur inférieure à celle de la marche supérieure selon l'axe longitudinal du véhicule pour tenir compte de l'encombrement de la roue voisine.

Selon un mode de réalisation préféré de l'invention, le moyen de déplacement est fixé au véhicule par l'intermédiaire d'un bras de support qui est solidement fixé sur le châssis du véhicule et le moyen de déplacement est logé dans un carter qui est mobile en translation longitudinale par rapport au bras de support sous l'action du moyen de déplacement. Ce carter permet avantageusement de protéger le moyen de déplacement.

Selon un exemple de mise en oeuvre de l'invention, la marche supérieure est fixée sur le carter tandis que la marche inférieure est montée sur le carter par l'intermédiaire d'une tige pivotante. Ainsi les deux marches peuvent être déplacées en translation tandis que la marche inférieure effectue en outre un mouvement de pivotement, ce qui permet de déplacer le marchepied selon l'invention de sa position escamotée à sa position déployée et inversement.

Selon un mode de réalisation préféré de l'invention, la tige comprend une partie oblique de sorte qu'en position déployée du marchepied, la marche inférieure est en saillie vers l'extérieur par rapport à la marche supérieure, ce qui facilite la montée et la descente du chauffeur.

Selon un exemple de mise en oeuvre de l'invention, le marchepied comprend un patin adapté pour guider la translation longitudinale du carter par rapport au bras de support lors du déplacement en translation des marches supérieure et inférieure.

Selon un autre exemple de mise en oeuvre de l'invention, le moyen de déplacement comprend un moyen de blocage en position du vérin qui verrouille celui-ci en position lorsqu'il est dans les positions extrémales correspondant aux positions escamotée et déployée du marchepied. Ce moyen de blocage en position limite ainsi les déformations de la tige de vérin.

Selon un exemple supplémentaire de mise en oeuvre de l'invention, le moyen de blocage est prévu de sorte que le vérin n'est pas en fin de course lorsqu'il est bloqué dans la position extrémale correspondant à la position déployée du marchepied. Le moyen de blocage en position diminue ainsi la sensation de souplesse du marchepied lors de la montée et descente du chauffeur.

Selon un mode de réalisation préféré de l'invention, le moyen de blocage comprend au moins un crochet comportant deux encoches opposées, une encoche étant prévue pour venir s'engager avec un ergot lorsque le marchepied est en position escamotée et l'autre encoche étant prévue pour venir s'engager avec un autre ergot lorsque le marchepied est en position déployée, ces ergots étant montés sur une partie du marchepied qui est fixe par rapport au véhicule.

Selon un mode de réalisation préféré de l'invention, le moyen de pivotement comprend un ensemble de bielles qui fait pivoter la marche inférieure lors du déplacement en translation des marches supérieure et inférieure.

### Brève description des dessins

D'autres caractéristiques et avantages de la présente invention apparaîtront plus clairement à la lecture de la description qui va suivre, faite en référence aux dessins annexés, donnés à titre d'exemples non limitatifs, dans lesquels :
- la figure 1 est une vue d'ensemble en perspective de dessus d'un marchepied selon l'invention en position déployée monté sur un véhicule à côté d'une roue ;
- la figure 2 est une vue d'ensemble en perspective de dessus du marchepied de la figure 1 en position escamotée ;
- la figure 3 est une vue d'ensemble en perspective de dessous d'un marchepied selon l'invention en position déployée ;
- la figure 4 est une autre vue d'ensemble en perspective de dessous d'un marchepied selon l'invention en position déployée sur laquelle le vérin est représenté en traits fantômes ;
- les figures 5 à 10 sont des vues illustrant les étapes de déploiement d'un marchepied selon l'invention, les figures impaires étant des vues de dessus tandis que les figures paires sont des vues de dessous.

### Mode(s) de réalisation de l'invention

Les éléments structurellement et fonctionnellement identiques présents sur plusieurs figures distinctes, sont affectés d'une même référence numérique ou alphanumérique.

Le marchepied (1) selon l'invention est prévu pour être mis en place au niveau de la porte d'accès au poste de conduite d'un véhicule routier (2) de type poids lourd, par exemple un camion, un tracteur ou un engin de chantier, notamment lorsque cette porte d'accès est située au niveau d'une roue (3).

Ce marchepied (1) comporte une marche supérieure (4) et une marche inférieure (5), ainsi qu'un moyen de déplacement (6) permettant de le déployer et de l'escamoter entre une position escamotée de rangement et une position déployée d'utilisation.

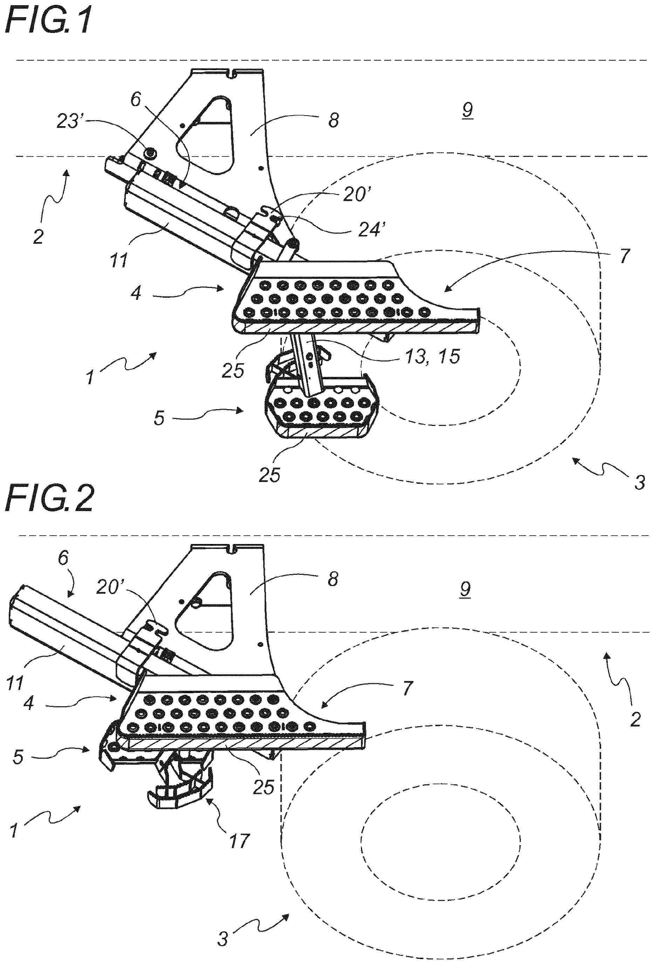

Comme cela est représenté sur les figures 2, 5 et 6, en position escamotée, les marches supérieure (4) et inférieure (5) sont repliées à l'arrière de la roue (3), de sorte de ne pas dépasser du gabarit du véhicule (2).

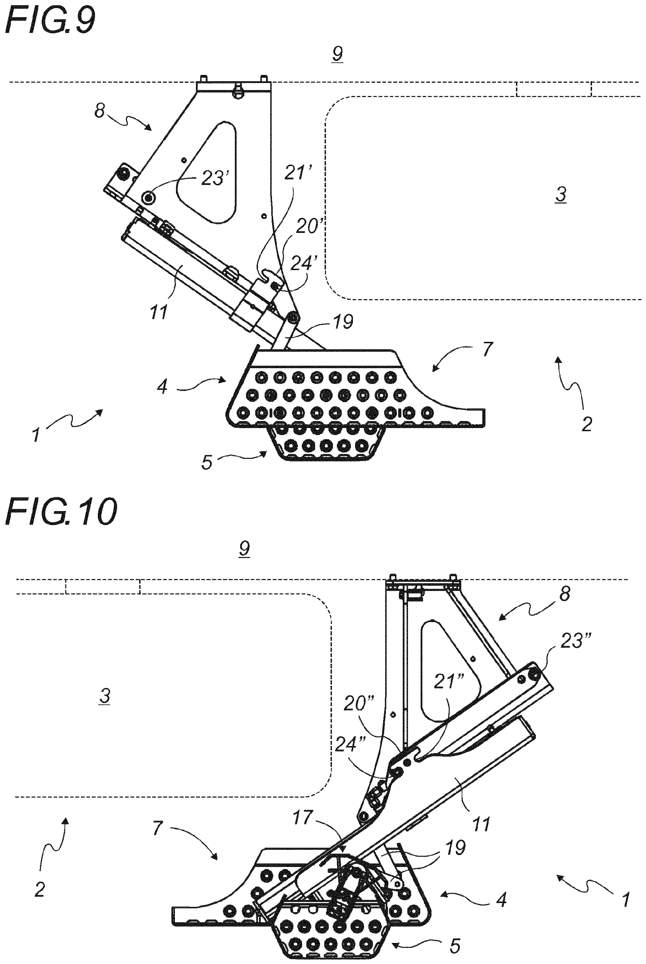

Comme cela est représenté sur les figures 1, 9 et 10, en position déployée, les marches supérieure (4) et inférieure (5) sont positionnées à proximité immédiate du flanc externe de la roue (3), de sorte de faire saillie vers l'extérieur pour permettre au chauffeur de monter jusqu'au poste de conduite et d'en descendre.

Afin d'être escamoté au moins partiellement derrière la roue (3), la marche supérieure (4) présente préférentiellement une découpe (7) sur sa partie avant tandis que la marche inférieure (5) présente une longueur inférieure à celle de la marche supérieure (4) selon l'axe longitudinal du véhicule (2). Ainsi les marches supérieure (4) et inférieure (5) n'entrent pas en contact avec la roue (3) lors du déploiement et de l'escamotage du marchepied (1).

Le marchepied (1) est monté sur le véhicule (2) par l'intermédiaire d'un bras de support (8) qui est solidement fixé sur le châssis (9) du véhicule (2).

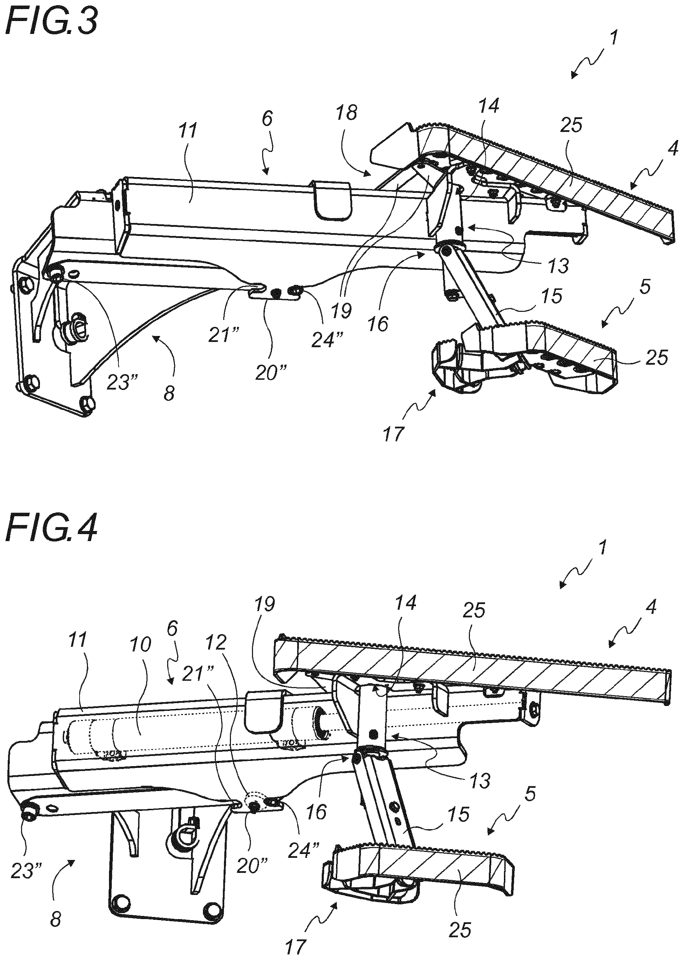

Selon un mode de réalisation préféré de l'invention, le moyen de déplacement (6) comprend un vérin (10) hydraulique ou pneumatique, par exemple un vérin (10) double tige tel que (représenté en traits fantômes sur la figure 4.

Le moyen de déplacement (6) est fixé sur le bras de support (8) et est logé dans un carter (11) qui est mobile en translation par rapport au bras de support (8) sous l'action du vérin (10).

Selon un mode de réalisation préféré de l'invention, le marchepied (1) comprend également un patin (12) adapté pour guider la translation longitudinale du carter (11) par rapport au bras de support (8) lors du déplacement en translation des marches supérieure (4) et inférieure (5).

Ce patin (12) est représenté en traits fantômes sur la figure 4. Il est préférentiellement monté à rotation en sous-face du crochet (20', 20") qui sera décrit plus loin. Sur la figure 4, un patin (12) est représenté sur la face du dessous du carter (11), mais un second patin (12) identique est également être prévu sur la face du dessus du carter (11).

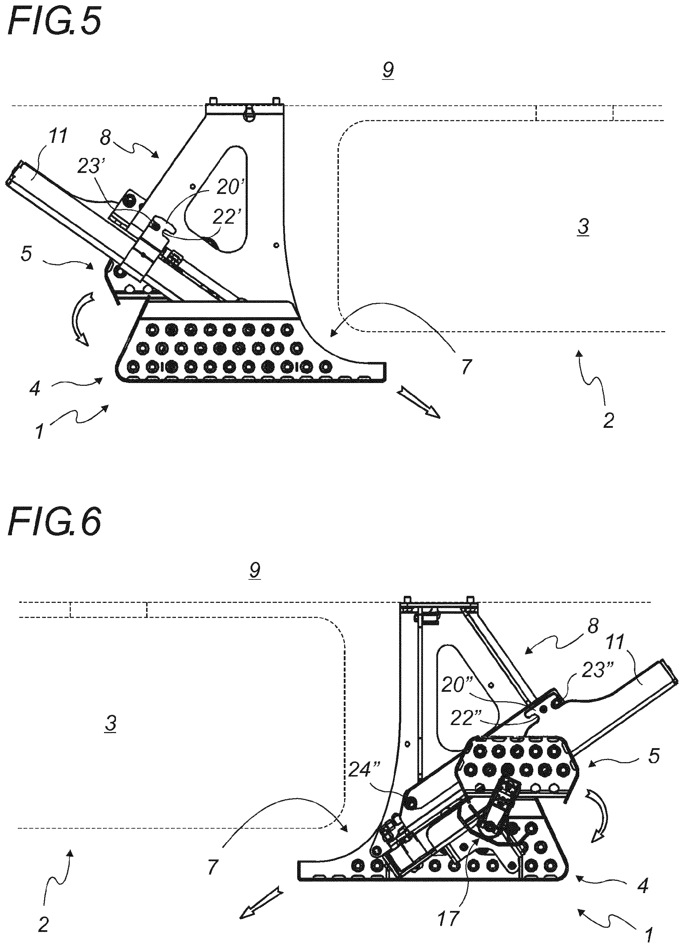

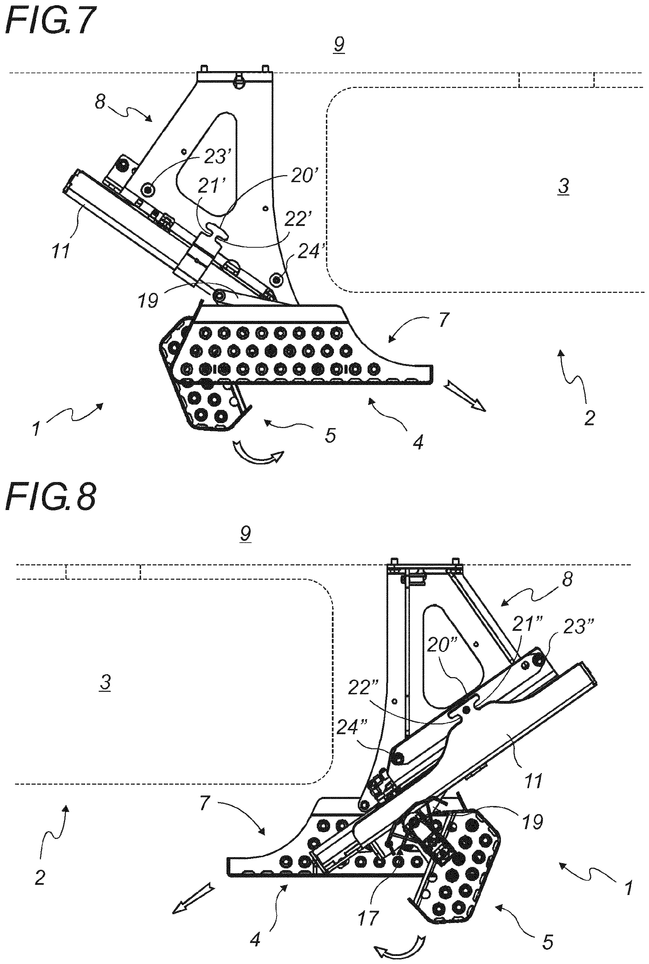

Lors du déploiement du marchepied (1) représenté sur les figures 5 à 10, la translation des marches supérieure (4) et inférieure (5) se fait de manière horizontale, vers l'avant du véhicule (2), en diagonal vers l'extérieur, depuis le châssis du véhicule (2) vers la roue (3) avant de celui-ci. Lors de l'escamotage du marchepied (1) cette translation se fait en sens inverse.

La marche supérieure (4) est fixée sur le carter (11), par exemple au niveau de l'extrémité avant de celui-ci, c'est-à-dire au niveau de l'extrémité du carter qui est située du côté extérieur, de manière à être déplacée en translation sous l'action du moyen de déplacement (6).

La marche inférieure (5) est fixée au moyen de déplacement (6) par l'intermédiaire d'une tige (13) sensiblement verticale, de sorte d'être également déplacée en translation conjointement avec la marche supérieure (4).

Cette tige (13) traverse par exemple la marche supérieure (4) au niveau d'une ouverture traversante (14).

Elle comprend préférentiellement une partie oblique (15) de sorte qu'en position déployée du marchepied (1), la marche inférieure (5) est en saillie vers l'extérieur par rapport à la marche supérieure (4).

La liaison entre la partie verticale de la tige (13) et sa partie oblique (15) peut par exemple être réalisée par une rotule (16).

La marche inférieure (5) comporte une marche de secours (17) prévue à l'arrière de celle-ci pour pouvoir être utilisée lorsque le marchepied (1) est en position escamotée.

La marche inférieure (5) est montée pivotante sur le moyen de déplacement (6) de manière à ce que, lorsque le marchepied (1) est en position escamotée la marche inférieure (5) est orientée vers le véhicule (2) tandis que la marche de secours (17) est orientée vers le flanc externe du véhicule (2) pour permettre au chauffeur de monter jusqu'au poste de conduite et d'en descendre, mais sans que la marche de secours (17) ne dépasse du gabarit du véhicule (2).

De même, lorsque le marchepied (1) est en position déployée, la marche inférieure (5) est orientée vers le flanc externe du véhicule (2) tandis que la marche de secours (17) est orientée vers le véhicule (2).

Dans ce but, la tige (13) est montée pivotante sur le moyen de déplacement (6) tandis que le moyen de déplacement (6) comprend en outre un moyen de pivotement (18) pour faire pivoter la marche inférieure (5), par exemple de 180 degrés, lors de l'escamotage du marchepied (1) et lors de son déploiement.

Ce moyen de pivotement (18) comprend par exemple un ensemble de bielles (19) adapté pour faire pivoter la marche inférieure (5) lors du déplacement en translation des marches supérieure (4) et inférieure (5).

Selon un mode de réalisation préféré de l'invention, le marchepied (1) peut comporter en outre un moyen de blocage en position du vérin (10) hydraulique ou pneumatique qui verrouille celui-ci en position lorsqu'il est dans les positions extrémales correspondant aux positions escamotée et déployée du marchepied (1).

Ce moyen de blocage en position peut se présenter sous la forme d'un crochet (20', 20") prévu sur le dessus et/ou sur le dessous du carter (11) et comportant deux encoches (21', 21", 22', 22") opposées, tandis que le bras de support (8) est équipé de deux ergots (23', 23", 24', 24") sur sa face du dessus et/ou sur sa face du dessous. Chaque crochet (20', 20") est prévu pour venir s'engager avec un ergot (23', 23") lorsque le marchepied (1) est en position extrémale escamotée et avec un autre ergot (24', 24") lorsqu'il est en position extrémale déployée. Lorsque les marches supérieure (4) et inférieure (5) sont déplacées en translation, chaque crochet (20', 20") se déplace ainsi entre deux ergots (23', 23", 24', 24"), se déplaçant d'un ergot à l'autre lors des mouvements de translation effectués par le moyen de déplacement (6), pour venir s'engager avec un ergot (23', 23") par une première encoche (21', 21") lorsque le marchepied (1) est en position escamotée, puis avec l'autre ergot (24', 24") par l'autre encoche (22', 22") opposée lorsque le marchepied (1) est en position déployée.

Ce moyen de blocage est prévu sur les faces de dessus et de dessous du carter (11) et du bras de support (8) et de sorte que le vérin (10) n'est pas en fin de course lorsqu'il est bloqué dans la position extrémale correspondant à la position déployée du marchepied (1) afin de mieux limiter les déformations de la tige du vérin (10).

Les bordures extérieures des marches supérieure (4) et inférieure (5) sont préférentiellement pourvues d'une bande de marquage (25), par exemple réfléchissante.

Il est évident que la présente description ne se limite pas aux exemples explicitement décrits, mais comprend également d'autres modes de réalisation et/ou de mise en oeuvre. Ainsi, une caractéristique technique décrite peut être remplacée par une caractéristique technique équivalente sans sortir du cadre de la présente invention et une étape décrite de mise en oeuvre du procédé peut être remplacée par une étape équivalente sans sortir du cadre de l'invention.

## Revendications

1. Marchepied (1) prévu pour être mis en place au niveau de la roue (3) d'un véhicule (2) routier de type poids lourd, comportant une marche supérieure (4), une marche inférieure (5) et un moyen de déplacement (6) permettant de le déployer et de l'escamoter entre les deux positions suivantes :
• une position escamotée dans laquelle les marches supérieure (4) et inférieure (5) sont repliées à l'arrière de la roue (3), de sorte de ne pas dépasser du gabarit du véhicule (2) ;
• une position déployée dans laquelle les marches supérieure (4) et inférieure (5) font saillie vers l'extérieur pour permettre au chauffeur de monter au poste de conduite et d'en descendre ; et
la marche inférieure (5) est montée pivotante par rapport à la marche supérieure (4) ; **caractérisé en ce que** :
• la marche inférieure (5) comporte une marche de secours (17) prévue à l'arrière de celle-ci ;
• les marches supérieure (4) et inférieure (5) sont déplacées en translation par le moyen de déplacement (6) ;
• le moyen de déplacement (6) comporte en outre un moyen de pivotement (18) pour faire pivoter la marche inférieure (5) de sorte que :
- en position escamotée du marchepied (1), la marche inférieure (5) est orientée vers le véhicule (2) tandis que la marche de secours (17) est orientée vers le flanc externe du véhicule (2) ;
- en position déployée du marchepied (1), la marche inférieure (5) est orientée vers le flanc externe du véhicule (2) tandis que la marche de secours (17) est orientée vers le véhicule (2).

2. Marchepied (1) selon la revendication 1, **caractérisé en ce que** le moyen de déplacement (6) comprend un vérin (10) hydraulique ou pneumatique.

3. Marchepied (1) selon la revendication 2, **caractérisé en ce que** le vérin (10) hydraulique ou pneumatique est un vérin (10) double tige.

4. Marchepied (1) selon l'une quelconque des revendications précédentes, **caractérisé en ce qu'**en position déployée du marchepied (1), les marches supérieure (4) et inférieure (5) sont positionnées à proximité immédiate du flanc externe de la roue (3) et **en ce que** la marche supérieure (4) présente une découpe (7) pour ne pas entrer en contact avec la roue (3) lors du déploiement et de l'escamotage du marchepied (1).

5. Marchepied (1) selon l'une quelconque des revendications précédentes, **caractérisé en ce que**, dans l'une ou l'autre des positions escamotée et déployée du marchepied (1), la marche inférieure (5) présente une longueur inférieure à celle de la marche supérieure (4) selon l'axe longitudinal du véhicule (2).

6. Marchepied (1) selon l'une quelconque des revendications précédentes, **caractérisé en ce que** le moyen de déplacement (6) est fixé au véhicule (2) par l'intermédiaire d'un bras de support (8) qui est solidement fixé sur le châssis (9) du véhicule (2) et **en ce que** le moyen de déplacement (6) est logé dans un carter (11) qui est mobile en translation longitudinale par rapport au bras de support (8) sous l'action du moyen de déplacement (6).

7. Marchepied (1) selon la revendication 6, **caractérisé en ce que** la marche supérieure (4) est fixée sur le carter (11) tandis que la marche inférieure (5) est montée sur le carter (11) par l'intermédiaire d'une tige (13) pivotante.

8. Marchepied (1) selon la revendication 7, **caractérisé en ce que** la tige (13) comprend une partie oblique (15) de sorte qu'en position déployée du marchepied (1), la marche inférieure (5) est en saillie vers l'extérieur par rapport à la marche supérieure (4).

9. Marchepied (1) selon la revendication 6, **caractérisé en ce que** le marchepied (1) comprend un patin (12) adapté pour guider la translation longitudinale du carter (11) par rapport au bras de support (8) lors du déplacement en translation des marches supérieure (4) et inférieure (5).

10. Marchepied (1) selon la revendication 2, **caractérisé en ce que** le moyen de déplacement (6) comprend un moyen de blocage en position du vérin (10) qui verrouille celui-ci en position lorsqu'il est dans les positions extrémales correspondant aux positions escamotée et déployée du marchepied (1).

11. Marchepied (1) selon la revendication 10, **caractérisé en ce que** le moyen de blocage est prévu de sorte que le vérin (10) n'est pas en fin de course lorsqu'il est bloqué dans la position extrémale correspondant à la position déployée du marchepied (1).

12. Marchepied (1) selon la revendication 10, **caractérisé en ce que** le moyen de blocage comprend au moins un crochet (20', 20") comportant deux encoches (21', 21", 22', 22") opposées, une encoche (21', 21") étant prévue pour venir s'engager avec un ergot (23', 23") lorsque le marchepied (1) est en position escamotée et l'autre encoche (22', 22") étant prévue pour venir s'engager avec un autre ergot (24', 24") lorsque le marchepied (1) est en position déployée, ces ergots (23', 23", 24', 24") étant montés sur une partie du marchepied (1) qui est fixe par rapport au véhicule (2).

13. Marchepied (1) selon l'une quelconque des revendications précédentes, **caractérisé en ce que** le moyen de pivotement (18) comprend un ensemble de bielles (19) qui fait pivoter la marche inférieure (5) lors du déplacement en translation des marches supérieure (4) et inférieure (5).

## Patentansprüche

1. Trittstufe (1) zur Anbringung in Höhe des Rades (3) eines Fahrzeugs (2) vom Typ Lastkraftwagen, umfassend eine obere Stufe (4), eine untere Stufe (5) und eine Bedienvorrichtung (6), mit der es zwischen den beiden folgenden Positionen aus- und wieder eingeklappt werden kann:
• eine eingeklappte Position, in der die obere (4) und untere (5) Stufe hinter das Rad (3) geklappt sind, um nicht über die Außenmaße des Fahrzeugs (2) hinauszuragen.
• eine ausgeklappte Position, in der die obere (4) und untere (5) Stufe nach außen geklappt sind, damit der Fahrer in die Fahrerkabine ein- und aussteigen kann; und
. die untere Stufe (5) ist zur oberen Stufe (4) schwenkbar montiert;
**dadurch gekennzeichnet, dass**
• die untere Stufe (5) eine Notstufe (17) umfasst, die auf ihrer Rückseite vorgesehen ist;
• die obere (4) und untere (5) Stufe durch die Bedienvorrichtung (6) verschoben werden können;
• die Bedienvorrichtung (6) umfasst außerdem ein Schwenkmittel (18). um die untere Stufe (5) zu schwenken, so dass:
- in der eingeklappten Position der Trittstufe (1) die untere Stufe (5) zum Fahrzeug (2) hin gerichtet ist, während die Notstufe (17) zur Außenwand des Fahrzeugs (2) hin ausgerichtet ist;
- in der ausgeklappten Position der Trittstufe (1) die untere Stufe (5) zur Außenwand des Fahrzeugs (2) hin gerichtet ist, während die Notstufe (17) zum Fahrzeug (2) hin ausgerichtet ist.

2. Trittstufe (1) nach Anspruch 1, **dadurch gekennzeichnet, dass** die Bedienvorrichtung (6) einen Hydraulik- oder Pneumatik- Heber (10) umfasst.

3. Trittstufe (1) nach Anspruch 2, **dadurch gekennzeichnet, dass** es sich bei dem Hydraulik- oder Pneumatik-Heber (10) um einen Heber (10) mit Doppelstange handelt.

4. Trittstufe (1) nach einem der vorstehenden Ansprüche, **dadurch gekennzeichnet, dass** in aufgeklappter Position der Trittstufe (1) die obere (4) und untere (5) Stufe in unmittelbarer Nähe der Außenseite des Rades (3) liegen und dass die obere Stufe (4) einen Ausschnitt (7) aufweist, damit sie beim Ein- und Ausklappen der Trittstufe (1) keinen Kontakt zum Rad (3) hat.

5. Trittstufe (1) nach einem der vorstehenden Ansprüche, **dadurch gekennzeichnet, dass** in ein- oder aufgeklappter Position der Trittstufe (1) die untere Stufe (5), in Richtung der Längsachse des Fahrzeugs (2), kürzer ist als die obere Stufe (4).

6. Trittstufe (1) nach einem der vorstehenden Ansprüche, **dadurch gekennzeichnet, dass** die Bedienvorrichtung (6) am Fahrzeug (2) über einen Haltearm (8) befestigt ist, der fest am Fahrgestell (9) des Fahrzeugs (2) befestigt ist und dadurch, dass die Bedienvorrichtung (6) in einem Gehäuse (11) untergebracht ist, das unter dem Einfluss der Bedienvorrichtung (6) in Längsrichtung, bezogen auf den Haltearm (8), verschiebbar ist.

7. Trittstufe (1) nach Anspruch 6, **dadurch gekennzeichnet, dass** die obere Stufe (4) am Gehäuse (11) befestigt ist, während die untere Stufe (5) über eine schwenkbare Stange (13) am Gehäuse (11) befestigt ist.

8. Trittstufe (1) nach Anspruch 7, **dadurch gekennzeichnet, dass** die Stange (13) ein schräges Teilstück (15) umfasst, so dass in der eingeklappten Position der Trittstufe (1), die untere Stufe (5) bezogen auf die obere Stufe (4), nach außen vor ragt.

9. Trittstufe (1) nach Anspruch 6, **dadurch gekennzeichnet, dass** die Trittstufe (1) eine Kufe (12) umfasst, durch die die Längsverschiebung des Gehäuses (11) bezogen auf den Haltearm (8) bei der Verschiebung der oberen (4) und unteren (5) Stufe geführt werden kann.

10. Trittstufe (1) nach Anspruch 2, **dadurch gekennzeichnet, dass** die Bedienvorrichtung (6) eine Positions- Sperrvorrichtung des Hebers (10) umfasst, durch welche dieser in seiner Position verriegelt wird, wenn er sich in den äußersten Positionen entsprechend der eingeklappten oder ausgeklappten Position der Trittstufe (1) befindet.

11. Trittstufe (1) nach Anspruch 10, **dadurch gekennzeichnet, dass** die Sperrvorrichtung in einer Art und Weise vorgesehen ist, dass sich der Heber (10) nicht am Hubende befindet, wenn er in der äußersten Position, die der eingeklappten Position der Trittstufe (1) entspricht, blockiert wird.

12. Trittstufe (1) nach Anspruch 10, **dadurch gekennzeichnet, dass** die Sperrvorrichtung mindestens einen Haken (20', 20") umfasst, der zwei gegenüberliegende Kerben (21', 21", 22', 22") umfasst, eine Kerbe (21', 21") ist dazu vorgesehen, fass eine Nase darin einrastet (23', 23"), wenn sich die Trittstufe (1) in der eingeklappten Position befindet und die andere Kerbe (22', 22") ist dazu vorgesehen, dass eine andere Nase darin einrastet (24', 24"), wenn sich die Trittstufe (1) in der ausgeklappten Position befindet, diese Rasternasen (23', 23", 24', 24") sind auf einem Teil der Trittstufe (1) montiert, die bezogen auf das Fahrzeug (2) fest ist.

13. Trittstufe (1) nach einem der vorstehenden Ansprüche, **dadurch gekennzeichnet, dass** das Schwenkmittel (18) eine Stangeneinheit (19) umfasst, durch die die untere Stufe (5) bei der Verschiebung der oberen (4) und unteren (5) Stufe geschwenkt werden kann.

## Claims

1. Ladder (1) designed to be deployed near the wheel (3) of a heavy road vehicle (2), incorporating one upper step (4), one lower step (5), and a movement system (6) allowing its deployment and retraction between the following two positions:
• one retracted position in which the upper (4) and lower (5) steps are folded behind the wheel (3) so as not to protrude beyond the vehicle's (2) silhouette;
• one deployed position in which the upper (4) and lower (5) steps are salient towards the exterior to enable the driver/operator to climb up into and down from the cabin;
and
• the lower step (5) is mounted pivoting in relation to the upper step (4);
**characterized by** the fact that:
• the lower step (5) incorporates an emergency step (17) provided at its rear;
• the upper (4) and lower (5) steps are moved sideways by the movement system (6);
• the movement system (6) also incorporates a pivoting system (18) to pivot the lower step so that:
• when the ladder (1) is in the retracted position, the lower step (5) is oriented towards the vehicle (2), whereas the emergency step (17) is oriented towards the exterior side of the vehicle (2);
• in the deployed position of the ladder (1), the lower step (5) is oriented towards the exterior side of the vehicle (2), while the emergency step (17) is oriented towards the vehicle (2).

2. Ladder (1) in accordance with claim 1, **characterized by** the fact that the movement system (6) incorporates a hydraulic or pneumatic jack (10).

3. Ladder (1) in accordance with claim 2, **characterized by** the fact that the hydraulic or pneumatic jack (10) is a dual-leg jack (10).

4. Ladder (1) in accordance with any one of the preceding claims, **characterized by** the fact that, in the ladder's (1) deployed position, the upper (4) and lower (5) steps are positioned in immediate proximity to the exterior side of the wheel (3), and by the fact that the upper step (4) has a cut-out (7) so as not to come into contact with the wheel (3) during the deployment and retraction of the ladder (1).

5. Ladder (1) in accordance with any one of the preceding claims, **characterized by** the fact that, in one or other of the retracted or deployed positions of the ladder (1), the lower step (5) is of shorter length than the upper step (4), in the longitudinal axis of the vehicle (2).

6. Ladder (1) in accordance with any one of the preceding claims, **characterized by** the fact that the movement system (6) is secured to the vehicle (2) by means of a supporting arm (8) that is robustly secured to the chassis (9) of the vehicle (2), and by the fact that the movement system (6) is housed in a casing (11) that moves longitudinally in relation to the supporting arm (8), under the action of the movement system (6).

7. Ladder (1) in accordance with claim 6, **characterized by** the fact that the upper step (4) is secured to the casing (11), whereas the lower step (5) is mounted on the casing (11) by means of a pivoting rod (13).

8. Ladder (1) in accordance with claim 7, **characterized by** the fact that the rod (13) incorporates an oblique part (15), such that - in the ladder's (1) deployed position - the lower step (5) is salient towards the exterior in relation to the upper step (4).

9. Ladder (1) in accordance with claim 6, **characterized by** the fact that the ladder (1) incorporates a lug (12) designed to guide the longitudinal movement of the casing (11) in relation to the supporting arm (8) during the sideways movement of the upper (4) and lower (5) steps.

10. Ladder (1) in accordance with claim 2, **characterized by** the fact that the movement system (6) incorporates a system for locking the jack (10) in position, that locks it in position when it is in the extreme positions corresponding to the ladder's (1) retracted and deployed positions.

11. Ladder (1) in accordance with claim 10, **characterized by** the fact that the locking system is designed so that the jack (10) is not at the end of its travel when it is locked in the extreme position corresponding to the ladder's (1) deployed position.

12. Ladder (1) in accordance with claim 10, **characterized by** the fact that the locking system incorporates at least one hook (20', 20") having two opposed notches (21', 21", 22', 22"), with one notch being designed to engage with a lug (23', 23") when the ladder (1) is in the retracted position, and with the other notch (22', 22") being designed to engage with another lug (24', 24") when the ladder (1) is in the deployed position, with these lugs (23', 23", 24', 24") being mounted on a part of the ladder (1) that is immobile in relation to the vehicle (2).

13. Ladder (1) in accordance with any one of the preceding claims, **characterized by** the fact that the pivoting system (18) incorporates a connecting rod system (19) that causes the lower step (5) to pivot during the sideways movement of the upper (4) and lower (5) steps.
